(19) Europäisches Patentamt
European Patent Office
Office européen des brevets

(11) **EP 3 196 246 A1**

(12) **EUROPÄISCHE PATENTANMELDUNG**

(43) Veröffentlichungstag:
**26.07.2017   Patentblatt 2017/30**

(51) Int Cl.:
***C08L 23/22*** *(2006.01)*

(21) Anmeldenummer: **16152537.3**

(22) Anmeldetag: **25.01.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **LANXESS Deutschland GmbH**
**50569 Köln (DE)**

(72) Erfinder:
• **Schröder, Andreas**
**69469 Weinheim (DE)**
• **Wawrzinski, Lars**
**68309 Mannheim (DE)**
• **Gräff, Ludwig**
**68519 Viernheim (DE)**
• **Schilling, Jürgen**
**68723 Schwetzingen (DE)**

(54) **VERFAHREN ZUR PRÜFUNG DER IN SITU SILANISIERUNG VON HELLEN FÜLLSTOFFEN**

(57)    Die Erfindung betrifft ein Verfahren zur Überprüfung der Silanisierung, welches eine inline Kontrolle der in situ Silanisierung von hellen Füllstoffen, insbesondere gefällten Kieselsäuren erlaubt. Dadurch wird eine kontinuierliche in situ Silanisierung bei der Herstellung von silanisierten hellen Füllstoffen enthaltenden Kautschukmischungen und eine repräsentative Kontrolle der Kautschukmischung unter Produktionsbedingungen ermöglicht. Das Verfahren arbeitet zudem zerstörungsfrei und weist eine hohe Toleranz für Ruß als zusätzlichem Bestandteil der Kautschukmischung auf.

EP 3 196 246 A1

**Beschreibung**

Die Erfindung betrifft das technische Gebiet der Silanisierung von hellen Füllstoffen. Unter hellen Füllstoffen versteht der Fachmann mineralische natürliche und synthetische Füllstoffe, welchen nicht auf Ruß basieren, wie z.B. Glimmer, Kaoline, Kreiden, Calciumcarbonaten, Talk, Zinkoxide, Aluminiumoxide, Titandioxide, Kieselsäure und Silikaten. Zur Verbesserung der Verarbeitbarkeit werden die hellen Füllstoffe durch Silanisierung hydrophobiert, wodurch sich die Eigenschaften der elastomeren Vulkanisate deutlich verbessern. Insbesondere in Kautschukmischungen für Reifenlaufflächen führt die Verwendung von silanisierten Füllstoffen im Vergleich zum schwarzen Füllstoff Ruß zu einer Verbesserung der Nassrutschfestigkeit und des Rollwiderstands, ohne den Abrieb des Reifens zu erhöhen.

Bei der Herstellung von z.B. Reifenlaufflächenmischungen wird die Kieselsäure mit einem Silanisierungsmittel in einem 1. Mischschritt im Kautschuk in einem Innenmischer diskontinuierlich dispergiert. Der Mischprozess wird dabei durch Einstellung der Mischparameter (Drehzahl, Füllgrad, Temperierung, etc.) so gefahren, dass die Auswurftemperatur im Bereich von 140°C bis 160°C liegt. In einem zweiten Mischschritt im Innenmischer wird die Mischung noch einmal im Bereich von 140°C bis 160°C homogenisiert. Unterhalb von 140°C findet keine Reaktion des Silans mit der Kieselsäure statt, oberhalb von 160°C zersetzt sich das Silan (vgl. z.B. F. Röthemeyer, F. Sommer; "Kautschuktechnologie Werkstoffe, Verarbeitung Produkte", Hanser Verlag 2. Überarbeitete Auflage; ISBN 10: 3-446-40480-5; Seite 272). Als Innenmischer kommen in der Gummiindustrie auch Innenmischer mit einem Austragsextruder zur Anwendung. Neben diskontinuierlichen Herstellungsverfahren werden auch kontinuierliche Verfahren mit Extrudern getestet wie in der DE69728538T2 offenbart. Die Silanisierung in einer Kautschukmischung wird als in situ Silanisierung bezeichnet.

Da die Temperaturen und Mischzeiten bei der in situ Silanisierung exakt eingehalten werden müssen, sind diese Verfahren sehr störanfällig. Prüfungen sollten daher möglichst schnell (inline), volumetrisch und repräsentativ durchgeführt werden. Nur in diesem Fall kann die in situ Silanisierung zuverlässig gesteuert, die thermische Belastung der Kautschukmischung niedrig und die Verfahrenseffizienz hoch gehalten und die Ausschussraten reduziert werden. Dies gilt umso mehr beim kontinuierlichen Verfahren zur in situ Silanisierung, welche sich auch wegen der unzureichenden Möglichkeit der inline Prüfung noch nicht auf dem Markt durchsetzen konnte.

Entgegen den Anforderungen zur Kontrolle der in situ Silanisierung können Messungen von unvernetzten Kautschukmischungen in der Gummiindustrie in der Regel erst mehrere Minuten oder sogar Tage nach der Herstellung der Kautschukmischung, durchgeführt werden (sogenannte offline Verfahren), da die Messungen zeitintensiv sind und eine zeitgleiche Messung von mehreren Proben eine Vielzahl teurer Messaparaturen erfordert. Daher wird die Qualität einer unvernetzten Kautschukmischung bislang lediglich stichprobenartig (< 0,1% der Gesamtmenge) überprüft. Typischerweise wird die Mooney-Viskosität der Stichproben der Kautschukmischung ermittelt, um die Vollständigkeit der Silanisierungsreaktion zu überprüfen (vgl. F. Röthemeyer, F. Sommer; "Kautschuktechnologie Werkstoffe, Verarbeitung Produkte", Hanser Verlag 2. Überarbeitete Auflage; ISBN 10: 3-446-40480-5; Seite 390). Die geringe Anzahl der Stichproben ist jedoch nicht repräsentativ für die gesamte Kautschukmischung. Zudem können die beschriebenen Möglichkeiten der Qualitätskontrolle verfahrensbedingt bislang nicht automatisiert durchgeführt werden, was den Zeitaufwand erhöht.

Für die Analyse von mit Extrudern compoundierten Kunststoffen sind eine Vielzahl repräsentativer inline Qualitätskontrollen bekannt, zum Beispiel NIR, Raman und UV/VIS Spektroskopie, bei denen die Proben durchstrahlt werden (vgl. Hochrein et al., Plastverarbeiter, Sept. 2009, S. 92). Bei Verwendung elektromagnetischer Wellen stört jedoch der Ruß, da die elektromagnetischen Wellen schon bei sehr geringen Anteilen von Ruß nahezu vollständig absorbiert werden. Bei Verwendung von mechanischen Druckwellen im hohen Frequenzbereich > 1 MHz (Ultraschallwellen) stört Ruß hingegen vergeleichsweise wenig. Hier sind jedoch helle Füllstoffe mit einer hohen Dichte wie Kieselsäure, Kaolin oder Kreide störend (vgl. A. Schröder, L. Gräff. L. Wawrzinski , Rubber World 251 (2015) 28), da diese die Ultraschallwellen stärker dämpfen als Ruß mit einer niedrigeren Dichte. Zudem besitzen unvernetzte Kautschuke im Gegensatz zu Kunststoffen aufgrund ihrer viskoelastischen Eigenschaften an sich schon eine relative hohe Dämpfung. Aufgrund dieser hohen Dämpfung gibt es bei volumetrischen Messungen in Transmission eine obere Grenze für den Abstand zwischen dem sendenden und dem empfangenden Ultraschallwandler. Wird diese Grenze überschritten, ist das Signal/Rauschverhältnis zu schlecht um verwertbare Messwerte zu erhalten.

Auf der anderen Seite gibt es eine untere Grenze, da die hochviskose Kautschukmischung noch zwischen den Ultraschallwandlern hindurch fließen muss. So wird in Rubber World 251 (2015) 28 die Verwendung von Ultraschall als inline Qualitätskontrolle für die Detektion von variierenden Anteilen an Füllstoff und Vernetzerbatches mit Markern sowie der Detektion von Verunreinigungen größer als 100 $\mu$m und der Makrodispersion von Füllstoffen beschrieben, allerdings nur bis zu einem Anteil von 30 phr an hellen Füllstoffen. Der Anteil an hellen Füllstoffen in Kautschukmischungen für Reifenlaufflächen liegt in der Regel oberhalb von 60 phr, was zu einer Zunahme der Viskosität der Kautschukmischung führt. Zudem wurde die Verwendung von Ultraschall zur Kontrolle einer chemischen Reaktion der in situ Silanisierung weder offenbart noch nahegelegt.

Die Verfolgung einer chemischen Reaktion, nämlich die Vernetzung eines unvernetzten Kautschuks mit Schwefel, wird in M. Jaunich, B. Stark, B. Hoster, Polymer Testing 28 (2009) 84 beschrieben. Hierbei wird jedoch die Änderung der Vernetzungsdichte mit Hilfe der Schallgeschwindigkeit und nicht der relative Schalldämpfungskoeffizient verfolgt. Dabei werden Ultraschallwandler mit einer Mittenfrequenz von f=4 MHz verwendet. Eine Extrusion der Mischung findet nicht statt.

Es bestand daher Bedarf an einem repräsentativen inline Verfahren zur Überprüfung der in situ Silanisierung von hellen Füllstoffen. Das Verfahren sollte eine inline Kontrolle der in situ Silanisierung von hellen Füllstoffen, insbesondere Kieselsäuren erlauben. Dabei sollte mit möglichst geringem Zeitversatz festgestellt werden können, ob und in wie weit die Silanisierung der Füllstoffoberfläche stattgefunden hat. Vorzugsweise sollte das Ergebnis der Qualitätskontrolle spätestens eine Minute nach Austritt aus dem Extruder vorliegen, um so eine umgehende Rückkopplung zur Verfahrenssteuerung zu erlauben und eine Steigerung der Produktivität und/oder eine Verringerung der Ausschussraten des Prozesses zu ermöglichen. Bevorzugt sollte das Verfahren auch eine repräsentative Kontrolle erlauben, d.h. eine Überprüfung von wenigstens 1% der silanisierten hellen Füllstoff enthaltenden Kautschukmischung ermöglichen, vorzugsweise unter Produktionsbedingungen, d.h. bei Durchsätzen von ≥ 5 kg/h besonders bevorzugt 50 kg/h. Von besonderem Vorteil wäre dabei ein zerstörungsfrei erfolgendes Verfahren. Um eine Verwendung des Verfahrens bei der Produktion von Kautschukmischungen für Reifen zu ermöglichen wäre es wünschenswert, dass Ruß als zusätzlicher Bestandteil der Kautschukmischung die Qualitätskontrolle nicht oder nur in geringem Umfang stört.

Überraschend wird die Aufgabe gelöst durch ein Verfahren zur Prüfung der Silanisierung von hellen Füllstoffen, wobei eine Mischung enthaltend mindestens einen silanisierten hellen Füllstoff und mindestens eines Kautschuks extrudiert, das dadurch erhaltene Extrudat mit Ultraschallwellen im Frequenzbereich von 4 bis 10 MHz beschallt und die Signalstärke der Ultraschallwellen nach Transmission durch das Extrudat ermittelt wird. Daraus kann die Schallwellenamplitude und/oder Schallwellenintensität der Ultraschallwellen nach Transmission durch das Extrudat bestimmt werden. In einer bevorzugten Ausführungsform wird der relative Dämpfungskoeffizient $\alpha_{rel}$ des Extrudats im Frequenzbereich der Ultraschallwellen bestimmt.

Bevorzugt liegt die Temperatur des Extrudats während der Beschallung oberhalb des Glasübergangsbereiches der Kautschukmischung im Frequenzbereich der Ultraschallwellen. Typischerweise liegt die Temperatur des Extrudats mindestens bei 100°C.

Bevorzugt beträgt der Druck im Extrudat während der Beschallung mindestens 10 bar.

Bevorzugt werden Ultraschallwellen im Frequenzbereich von 5 bis 7 MHz verwendet. Zur Messung können Ultraschalwellen einer oder mehrerer Frequenzen f verwendet werden. Bei der Beaufschlagung mit einem Frequenzspektrum ist die Verwendung von Ultraschallwellen im Bereich von z. B. von 5 bis 7 MHz typischerweise so zu verstehen, dass bei der emittierten Ultraschallfrequenz f das arithmetische Mittel der Grenzfrequenzen, also der unteren und der oberen Frequenz, bei der die Ultraschallwellenamplitude bzw. die Ultraschallwellenintensität 50% des Maximalwerts beträgt, von 5 bis 7 MHz liegt.

Im Sinne der vorliegenden Erfindung kann die Prüfung der Silanisierung sowohl die qualitative Bestimmung der Silanisierung als auch die quantitative Bestimmung des Silanisierungsgrads des Füllstoffs umfassen.

Bei dem Extrudat handelt es sich typischerweise um eine unvernetzte Kautschukmischung, welche vorzugsweise keine Vernetzungsmittel enthält.

Als Kautschuke eignen sich insbesondere Naturkautschuk (NR), Isoprenkautschuk (IR), Styrol-Butadien-Kautschuk (SBR), Butadienkautschuk (BR), Isopren-Isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxylierter Acrylnitril-Butadien-Kautschuk (HXNBR), Ethylen-Propylen-Dien-Kautschuk (EPDM), Ethylen-Propylen-Kautschuk (EPM), Fluorkautschuk (FKM), perfluorierter Fluorkautschuk (FFKM), Acrylat-Ethylen-Kautschuk (AEM), Acrylatkautschuk (ACM), Ethylen-Methylen-Acrylatkautschuk (EMA), chloriertes Polyethylen, chlorsulfoniertes Polyethylen, Ethylen-Vinylacetat-Kautschuk (EVA), Siliconkautschuk, Fluro-Silicon-Kautschuk, Ethylen-Epichlorhydrin Kautschuk (ECO), Epichlorhydrin-Kautschuk (CO) und/oder Polyurethan-Kautschuk (PU). Besonders bevorzugt sind Naturkautschuk (NR), Isoprenkautschuk (IR), Styrol-Butadien-Kautschuk (SBR), Butadienkautschuk (BR),

Bevorzugte helle Füllstoffe im Sinne der Erfindung sind Glimmer, Kaolin, Kieselerde, Calciumcarbonaten, Zinkoxide, Aluminiumoxide, Titandioxide, Kieselsäure, Kreide und Talkum, besonders bevorzugt Kieselsäuren und meist bevorzugt gefällte Kieselsäuren. In einer speziellen Ausführungsform der vorliegenden Erfindung können sogenannte Dual Phase Fillers als heller Füllstoff eingesetzt werden. Dabei handelt es sich um Rußpartikel mit einem einem Anteil von ≥ 5% an Kieselsäuren, welche dem Fachmann bekannt sind.

Der Füllstoffanteil in der Kautschukmischung beträgt typischerweise 50 bis 250 phr, vorzugsweise 60 bis 150 phr und besonders bevorzugt 70 bis 100 phr.

In einer Ausführungsform des erfindungsgemäßen Verfahrens werden die Extrudate mit mindestens einem Paar, vorzugsweise mit mindestens einem Detektionsband von wenigstens zwei Paaren Ultraschallwandlern analysiert. Die jeweiligen Wandler eines Paares sind gegenüberliegend, die Paare sind in Reihe nebeneinander angeordnet. Der Abstand zwischen den Wandlern eines Paares beträgt vorzugsweise mehr als 5 mm bis 30 mm, besonders bevorzugt von 10 bis 25 mm und meist bevorzugt 15 bis 20 mm.

Ein Ultraschallwandler eines Paares fungiert dabei als Sender und der andere Wandler als Empfänger des Ultraschallsignals. Im Sender werden Spannungspulse, generiert in der Prüfelektronik, mit Hilfe des piezoelektrischen Effektes in Ultraschallwellen umgewandelt. Typerweise weist ein Spannungspuls bei der Anregung des Senders die Form eines Rechteckpulse oder eines Nadelpulses auf. Bevorzugt werden mindestens zwei Spannungspulse (Burst-Signal) hintereinander mit einem zeitlichen Abstand $\geq 0{,}01$ µs verwendet, besonders bevorzugt werden mindestens sieben Spannungspulse, ganz besonders bevorzugt werden mindestens vierzehn Spannungspulse verwendet. Besonders bevorzugt entspricht der reziproke zeitliche Abstand zwischen den Spannungspulsen eines Burst-Signales der Eigenfrequenz der verwendeten Ultraschallwandler. Das Aussenden eines Ultraschallsignales bestehend aus einem einzelnen Spannungspuls bzw. aus Burst-Signalen wird bevorzugt mit einer Frequenz von mindestens 1 Hz wiederholt, besonders bevorzugt mindestens 10 Hz. Im Empfänger werden die Ultraschallwellen während der Extrusion nach Durchschallung (Transmission) durch die Kautschukmischung wieder in Spannungssignale umgewandelt und können zeitnah (in weniger als 1 min) ausgewertet werden.

Im Spalt zwischen den Ultraschallwandlern befindet sich das Extrudat. Dabei besteht vorzugsweise ein direkter Kontakt zwischen den Ultraschallwandlern und dem Extrudat. Der Spalt ist vorzugsweise an den Seiten begrenzt, wodurch ein Fließkanal mit einer Höhe von $\geq 5$ mm, besonders bevorzugt mit einer Höhe von $\geq 10$ mm ganz besonders bevorzugt mit einer Höhe von $\geq 20$ mm entsteht. Vorzugsweise beträgt die Breite des Fließkanals $\geq 20$ mm, besonders bevorzugt $\geq 50$ mm, ganz besonders bevorzugt $\geq 100$ mm. Das Extrudat durchläuft mit einer Geschwindigkeit von vorzugsweise 0,1 m/min. oder mehr, besonders bevorzugt 1 m/min. oder mehr, ganz besonders bevorzugt 10 m/min. oder mehr das Detektionsband. Hierfür wird vorzugsweise ein Extruder verwendet. Dabei wird ein Teil der Kautschukmischung, vorzugsweise $\geq 1\%$, bevorzugt $\geq 10\%$ besonders bevorzugt 100% der extrudierten Kautschukmischung mit dem Ultraschall analysiert. Auf diese Weise ist eine repräsentative und nicht nur stichprobenartige Qualitätskontrolle von Kautschukmischungen möglich.

In einer Ausführungsform der Erfindung wird die Amplitude der in Spannungssignale umgewandelten Schallwellen in Abhängigkeit der Zeitspanne seit dem Aussenden des Schallsignales im Sender gemessen. Diese sogenannte A-Scans werden in Abhängigkeit der Zeit registriert.

In einer Ausführungsform der Erfindung wird zur Quantifizierung der Signalstärke der Ultraschallwellen aus dem Ultraschallsignal eines A-Scans der Wert einer Ultraschallwellenamplitude, vorzugsweise die maximale Ultraschallwellenamplitude, ermittelt und der Logarithmus der Ultraschallwellenamplitude a gegen die Zeit t dargestellt.

Vorzugsweise wird das Ultraschallsignal eines A-Scans und nicht die Echos des Ultraschallsignales ausgewertet.

In einer weiteren Ausführungsform der Erfindung wird durch Quadrieren der Ultraschallwellenamplitude a die Ultraschallwellenintensität i ermittelt und der Logarithmus der Ultraschallwellenintensität i gegen die Zeit t dargestellt..

Bevorzugt wird der relative Dämpfungskoeffizient $\alpha_{rel.}$ gemäß der Formel (1 a)

$$\alpha_{rel.} = (\ln a_{ref.} - \ln a)/x = (\ln i_{ref.} - \ln i)/2x \qquad (1a)$$

aus der Ultraschallwellenamplitude a und der Ultraschallwellenamplitude $a_{ref.}$ einer Referenz und dem Abstand x zwischen den Ultraschallwandlern ermittelt. Alternativ kann der relative Dämpfungskoeffizient $\alpha_{rel.}$ aus der Ultraschallwellenintensität i, Ultraschallwellenintensität $i_{rel}$ einer Referenz und dem Abstand x zwischen den Ultraschallwandlern ermittelt werden.

In einer weiteren Ausführungsform der Erfindung werden die Werte des Ultraschallsignales quadriert und anschließend integriert und so die integrale Ultraschallwellenintensität I ermittelt. Alternativ kann die integrierte Ultraschallwellenamplitude A aus der Quadratwurzel der Ultraschallwellenintensität I ermittelt werden.

Besonders bevorzugt wird der relative Dämpfungskoeffizient $\alpha_{rel.}$ gemäß der Formel (1 b) mit Hilfe der integrierten Ultraschallwellen Intensität I und bzw. der integrierten Ultraschallwelenamplitude ermittelt.

$$\alpha_{rel.} = (\ln A_{ref.} - \ln A)/x = (\ln I_{ref.} - \ln I)/2x \qquad (1b)$$

In einer bevorzugten Ausführungsform der Erfindung wird mit Hilfe der Fast Fourier Transformation (FFT) das Frequenzspektrum a(f) des Ultraschallwellenamplitude bzw. der Ultraschallwellenintensität i(f) ermittelt.

Bevorzugt wird der relative Dämpfungskoeffizient $\alpha_{rel.}$ in Abhängigkeit der Frequenz f gemäß der Formel (1c)

$$\alpha_{rel.}(f) = (\ln a_{ref.}(f) - \ln a(f))/2x = (\ln i_{ref.}(f) - \ln i(f))/2x \qquad (1c)$$

aus der Ultraschallwellenamplitude a der Ultraschallwellenamplitude $a_{ref.}$ einer Referenz bzw. aus der Ultraschallwellenintewnsität i der Ultraschallwellenintensität $i_{ref.}$ einer Referenz und dem Abstand x zwischen den Ultraschallwandlern ermittelt.

In einer besonders bevorzugten Ausführungsform der Erfindung wird das Frequenzspektrum in Frequenzbereiche mit einer minimalen Frequenz von $f_{min.}$ und einer maximalen Frequenz $f_{max}$ unterteilt und integriert. Bevorzugt enthalten diese Frequenzbereiche ein Maximum der Ultraschallwellenamplitude bzw. der Ultraschallwellenintensität.

Bevorzugt wird der relative Dämpfungskoeffizient $\alpha_{rel.}$ in Abhängigkeit des Frequenzbereiches von einschließlich $f_{min.}$ bis einschließlich $f_{max.}$ gemäß der Formel (1d)

$$\alpha_{rel.}(f_{min.}, f_{max.}) = (\ln A_{ref.}(f_{min.}, f_{max.}) - \ln A(f_{min.}, f_{max.}))/x$$

$$= (\ln I_{ref.}(f_{min.}, f_{max.}) - \ln I(f_{min.}, f_{max.}))/2x \qquad (1d)$$

aus der Ultraschallwellenamplitude a der Ultraschallwellenamplitude $a_{ref.}$ einer Referenz und dem Abstand x zwischen den Ultraschallwandlern ermittelt.

Alternativ kann der relative Dämpfungskoeffizient $\alpha_{rel.}$ aus der Ultraschallwellenintensität i, Ultraschallwellenintensität $i_{rel}$ einer Referenz und dem Abstand x gemäß der Formel (1b) ermittelt werden.

Bevorzugt wird der relative Dämpfungskoeffizient $\alpha_{rel}$ bei der Eigenfrequenz der Ultraschallwandler ermittelt.

In einer Ausführungsform der Erfindung wird die Signalstärke des Ultraschallwellensignals der Referenz durch die Extrusion einer Kautschukmischung von mindestens 1 kg bei vergleichbaren Prozess- und Messbedingungen während der Extrusion ermittelt. Vergleichbare Prozess- und Messbedingungen während der Extrusion und der Messung liegen dann vor, wenn die Änderungen des Durchsatzes kleiner als 10%, die Änderungen der Temperatur des Extrudats zwischen den Ultraschallwandlern und der Ultraschallwandler kleiner als $< \pm 5$ K und Änderungen des Druckes p im Extrudat zwischen den Ultraschallwandlern kleiner als $< \pm 5$ bar sind. Bevorzugt sind Prozess- und Messbedingungen wenn die Änderungen des Durchsatzes kleiner als 5%, die Änderungen der Temperatur des Extrudates zwischen den Ultraschallwandlern und der Ultraschallwandler kleiner als $< \pm 2$ K und Änderungen des Druckes im Extrudat zwischen den Ultraschallwandlern kleiner als $< \pm 2$ bar sind. Besonders bevorzugt sind Prozess-und Messbedingungen wenn die Änderungen des Durchsatzes kleiner als 2%, die Änderungen der Temperatur des Extrudates zwischen den Ultraschallwandlern und der Ultraschallwandler kleiner als $< \pm 1$ K und Änderungen des Druckes im Extrudat zwischen den Ultraschallwandlern kleiner als $< \pm 1$ bar sind.

Besonders bevorzugt wird als Referenzmischungen eine Kautschukmischung mit gleicher Zusammensetzung verwendet, wie die zu überprüfende Kautschukmischung, wobei bei der Referenzmischung die Silanisierung optimal durchgeführt wurde.

In einer bevorzugten Ausführungsform wird der Abstand x zwischen den Ultraschallwandlern mit Hilfe eines Innentasters mit einer Genauigkeit von besser als 0,1 mm ermittelt.

In einer weiteren Ausführungsform der Erfindung wird zudem der Variationskoeffizient (Coefficient of Variation CV) des Logarithmus der Ultraschallwellenamplitude bzw. der Ultraschallwellenintensität ermittelt. Bevorzugt werden dabei weniger als 1000 Messwerte, besonders bevorzugt weniger als 100 Messwerte ganz besonders bevorzugt weniger als 10 Messwerte verwendet.

In einer bevorzugten Ausführungsform wird neben dem relativen Dämpfungskoeffizienten die Standardabweichung $\sigma$ des relativen Dämpfungskoeffizienten ermittelt. Bevorzugt werden dabei weniger als < 1000 Messwerte, besonders bevorzugt weniger als 100 Messwerte ganz besonders bevorzugt weniger als 10 Messwerte verwendet.

In einer weiteren Ausführungsform wird neben dem relativen Dämpfungskoeffizienten die Schallgeschwindigkeit $V_s$ des Extrudates gemäß Formel (2) ermittelt.

$$V_S = x/(t_{oF} - t_{US}) \qquad (2)$$

Die Zeitspanne $t_{oF}$ benötigt das Ultraschallsignal vom Zeitpunkt des Ausendens im Sender bis zum empfangen im Empfänger. Die Zeitspanne $t_{US}$ benötigt das Ultraschallsignal in den Ultraschallwandlern. Die Zeitspanne $t_{US}$ wird bei vergleichbaren Temperaturen für Ultraschallwandler wie während der Extrusion ermittelt. Die Ermittlung der Zeitspanne $t_{US}$ erfolgt durch Bestimmung von $t_{oF}$ bei variierendem Abstand x der Ultraschallwandler. Dabei wird bevorzugt die Referenzmischung zwischen den Ultraschallwandlern verwendet. Bevorzugt werden mindestens vier Abstände im Bereich von 5 mm bis 30 mm eingestellt. Die Zeitspanne $t_{US}$ ergibt sich aus dem Achsenabschnitt einer linearen Regression der Auftragung von $t_{oF}$ gegen den Abstand x der Ultraschallwandler.

Ungenügend silanisierte helle Füllstoffe führen zu einer Erniedrigung der Ultraschallwellenamplitude a bzw.

der Ultraschallintensität i am Empfänger und einer Erhöhung des relativen Dämpfungskoeffizienten $\alpha_{rel.}$. Die Schallgeschwindigkeit $V_s$ bleibt unverändert. Der Variationskoeffizient CV bzw. die Standardabweichung $\sigma$ des relativen Schalldämpfungskoeffizietn $\alpha_{rel.}$ gibt die Homogenität der Kautschukmischung wieder.

In einer bevorzugten Ausführungsform durchläuft der Kautschuk ein Detektionsband aus einem oder mehreren Ultraschallsensorpaaren, die über die gesamte Breite des Fließkanals angeordnet sind.

In einer besonders bevorzugten Ausführungsform durchläuft die Kautschukmischung zwei Detektionsbänder, die leicht versetzt angeordnet sind. Hierdurch wird gewährleistet, dass die komplette Kautschukmischung analysiert wird.

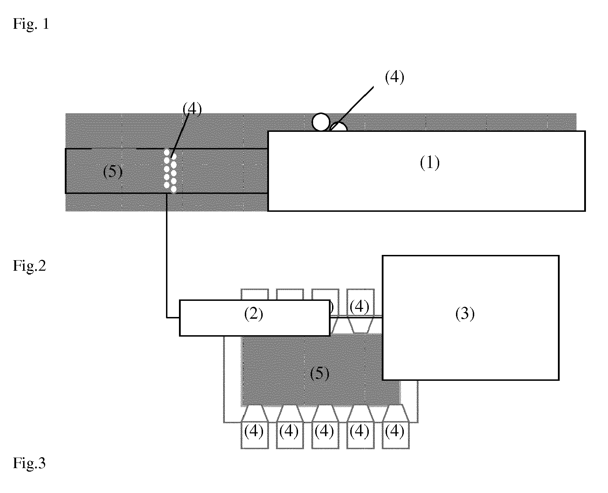

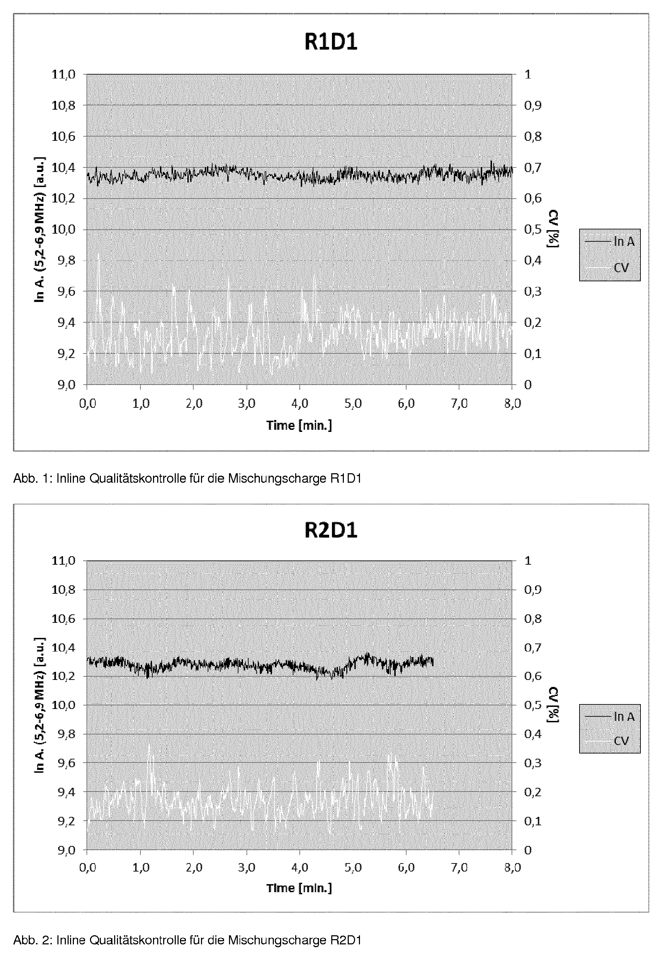

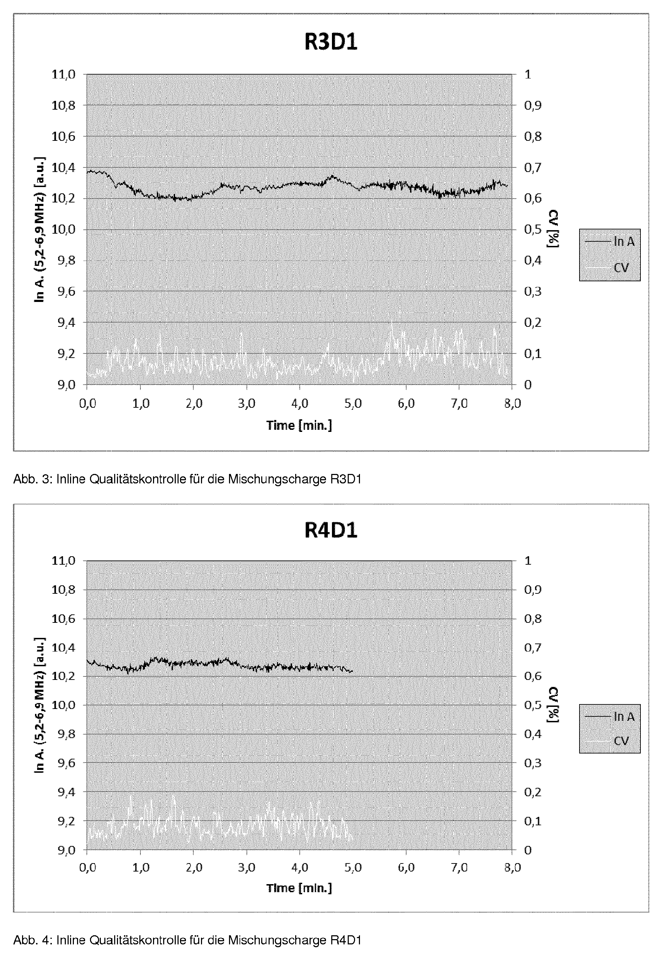

Bevorzugte Ausführungsformen der erfindungsgemäßen Vorrichtung sind in Fig.1 bis Fig. 3 dargestellt. Fig. 1 beschreibt exemplarisch das Detektionsband, bestehend aus den Ultraschallsensorpaaren (4), d.h. pro Paar jeweils ein Sender und ein Empfänger und dem Fließkanal (5) in Aufsicht, in Fig. 2 ist die Anordnung in Fig. 1 in Seitenansicht dargestellt. Fig. 3 zeigt eine Anordnung aus einem Extruder (1), dem Detektionsband, bestehend aus den Ultraschallwandlerpaaren (4) und dem Fließkanal (5) und der Ultraschallprüfelektronik (2) sowie einem Rechner als Auswerteeinheit (3).

Gegenstand der Erfindung ist zudem ein Verfahren zur Herstellung von silanisierten hellen Füllstoffen enthaltenden Kautschukmischungen, wobei mindestens ein heller Füllstoff mit mindestens einem Kautschuk und mindestens einem Silanisierungsmittel gemischt und silanisiert wird und wobei zumindest ein Teil der erhaltenen Kautschukmischung durch das erfindungsgemäße Verfahren zur Prüfung der Silanisierung geprüft wird. Vorzugsweise werden mehr als 1 Vol.-%, besonders bevorzugt mehr als 10 Vol.-%, meist bevorzugt 100 Vol.-% der erhaltenen Kautschukmischung durch das erfindungsgemäße Verfahren zur Prüfung der Silanisierung geprüft. Das erfindungsgemäße Verfahren kann dabei kontinuierlich oder als Batchverfahren, vorzugsweise kontinuierlich betrieben werden.

In einer weiteren bevorzugten Ausführungsform des erfindungsgemäßen Verfahrens wird der Extruder gleichzeitig als Mischaggregat für die Herstellung der Kautschukmischung, nebst in situ Silanisierung und zur Herstellung des Extrudats gemäß dem erfindungsgemäßen Prüfungsverfahren verwendet. Hierbei wird mindestens je ein heller Füllstoff, ein Silanisierungsmittel und ein Kautschuk dem Extruder zugeführt und in diesem aus dem Silanisierungsmittel und dem hellen Füllstoff der silanisierte Füllstoff gebildet.

Bevorzugt wird als Silanierungsmittel mindestens ein Silan verwendet. Als Silane im Sinne der Erfindung gelten Verbindungen, die Silizium und Wasserstoff sowie weitere Atome anderer chemischer Elemente enthalten. Bevorzugt sind Silane mit Trilalkoxysilygruppen.

Weiter bevorzugt sind bifunktionelle Silane, bei denen eine funktionelle Gruppe mit der Oberfläche eines hellen Füllstoffs reagieren kann, z.B. Trialkoxsilygruppen und die andere funktionelle Gruppe an der Vernetzungsreaktion des Kautschuks teilnehmen kann, wie zum Beispiel Vinyl, Thiol, oder Polysulfangruppen.

Ganz besonders bevorzugt sind folgende Silane:

Bis(3-triethoxysilypropyl)tetrasulfid (Si69), Bis(triethoxysilylpropyl)disulfid (Si75), Bis(tri-ethoxysilylpropyl)disulfid (Si266), 3-Thiocyanatopropyltriethoxysilan (Si264), VP Si 363® (von Evonik Industries), Vinylthriethoxysilan, Vinyltris(betamethoxyethoxy)silan, Gamma-mercaptopropyltrimethoxysilan, Gammaaminopropylthrimethoxysilan, Gammaglycidoxy-propylthrimethoxysilan, Aminoethylgammaaminopropyltrimethoxysilan, triaminofunktionelle Silane, Gammachlorpropyltriethoxysilan, Tris(1-methoxyethoxypropyl-2-oxy)vinylsilan.

Bei der Silanisierung handelt es sich um eine chemische Anbindung eines Silans an die Oberfläche des hellen Füllstoffs. Die Anbindung erfolgt durch Kondensationsreaktionen zwischen hydrolysierbaren Gruppen der verwendeten Silane und chemischen Gruppen an der Oberfläche des Füllstoffs. Die Silanisierung des hellen Füllstoffes wird vorzugsweise in einer Kautschukmischung (in situ Silanisierung) bei Temperaturen im Bereich von 140°C bis 160°C durchgeführt. Hierfür werden jeweils mindestens ein Kautschuk, Silan und heller Füllstoff vermischt und einer Temperatur im oben angegeben Bereich ausgesetzt.

Die Kautschukmischung enthält dabei typischerweise 5 bis 15 Gew.-% Silanierungsmittel bezogen auf den Gesamtanteil an hellen Füllstoffen.

Die Kautschukmischungen können dabei weitere Füllstoffe, weitere Additive wie Alterungsschutzmittel, Weichmacher, etc., Vernetzungsmittel, Vulkanisationsbeschleuniger und/oder Vulkanisationsverzögerer und/oder weitere Hilfsmittel enthalten.

Weitere Füllstoffe sind z.B. Kohlenstoff-basierte Füllstoffe, wie z.B. Ruß, Graphit, Carbon Nanotubes, sowie magnetisierbare Füllstoffe wie Carbonyl-Eisenpulver, Eisenoxide, Ferrite und/oder Fasern wie z.B. Aramidfaserpulpe und Kohlefasern.

Als Alterungsschutzmittel sind verfärbende und nicht verfärbende Alterungsschutzmittel, wie z.B. Paraphenylendiamine, Isopropylphenylparaphenylendiamin (IPPD), Para-Phenylen-Diamin (6PPD), N,N-ditoly-p-phenylendiamin (DTPD), etc., Amine, wie z.B. Trimethyl-1,2-dihydrochinolin (TMQ), (Phenyl)amine]-1,4-naphthalendion (PAN), Bis(4-octylphenyl)amin (ODPA), styrolisiertes Diphenylamin (SDPA), Mono- und Bisphenole, wie z.B. 2,2'-Methylen-bis-(4-methyl-6-tert.butylphenol (BPH), 2,2'-Isobutyliden-bis-(4,6-dimethyl-phenol) (NKF), 2,2'-Dicyclo-pentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol (BHT), substituiertes Phenol (DS), styrolisierte Phenole (SPH), Mercatobenzimidazole, wie z.B. 2-Mercaptobenzimidazol (MBI), 2-Mercaptomethyl-benzimidazole (MMBI), Zink-4- und -5-methyl-2-mercapto-benzimidazole (ZMMBI) geeignet.

Weichmacher sind z.B. langkettige Ester und/oder Ether, wie Thioester, Phthalsäureseter, Alkylsulfonsäureester, Adipinsäureester, Sebacinsäuresester, Dibenzylether, und/oder Mineralöle (paraffinische, aromatische naphthenische oder synthetische Öle).

Vernetzungsmittel im Sinne der Erfindung sind Netzknotenbildner. Netzknotenbildner sind Moleküle, die zwei einzelne Polymerketten mit einander verbinden können, wie z.B.

- Schwefel (löslich oder unlöslich) und/oder Schwefelspender, wie z.B. Dithiomorpholine (DTDM), Tetramethylthiuramdisulphide (TMTD), Tetraethylthiuramdisulphid (TETD), Dipentamethylenthiuramterasulphide (DPTT), Phosphorylpolysulfide, wie z.B. Rhenocure® SDT/S der Firma Rhein Chemie Rheinau GmbH und/oder
- Peroxide, wie z.B. Di-tert.Butyl-Peroxide, Di-(tert,Butyl-Peroxy-Timethyl-Cyclohexane, Di-(tert.-Butyl-peroxy-isopropyl)benzene, Dicumylperoxide, Dimethyl-di(tert.butyl-Peroxy)hexin, Butyl-Di-(tert,Butyl-Peroxy-)valerat,
- Resorcinol, Aldehyd-Amin-Kondensationsprodukte, wie z.B. Hexamethylentetramin, Resorcinol-Formaldehyd-Vorkondensate und/oder Vulkanisationsharze, wie zum Beispiel Halomethylphenolharz,
- Chinondioxime
- Bisphenole.

Beschleuniger, sind beispielsweise:

- Carbamate bzw. Triazine, wie z.B. Hexamethylendiamincarbamat (HMDC), organische Triazine,
- Thiazole, wie z.B. 2-Mercaptobenzothiazol (MBT), Zinkmercaptobenzothiazol (ZnMBT), Thiadiazole (TDD),
- Sulfenamide, wie Cyclohexyl-benzothiazol-Sulphenamide (CBS), Di-benzothiazyl-disulphid (MBTS), Butyl-benzothiazole-Sulphenamide (TBBS), Dicyclohexyl-Benzothiazol-Sulphenamid (DCBS), 2-(4-Morpholinylmercapto)-benzothiazol (MBS),
- Thiurame, wie Tetramethyl-thiuram-monosulphid (TMTM), Tetraethyl-thiuram-disulphid (TETD), Tetramethyl-thiuram-disulphid (TMTD), Tetrabenzylthiuram Disulphid (TBTD), Dipentamethylene-Thiuram-Tetra(Hexa)-Sulphid (DPTT),
- Dithiocarbamate, wie Zn-Dimethyldithiocarbamate (ZDMC), Cu-Dimethyldithiocarbamate, Bi- Dimethyldithio-carbamate, Zn-Diethyldithiocarbamate (ZDEC), Tellurdiethyldithio-carbamate (TDEC), Zn-Dibuthyldithiocarbamate (ZDBC), Zn-Ethyl-Phenyl-Dithiocarbamate (ZEPC), Zn-Dibenzyl-Dithiocarbamate (ZBEC), Ni-Dibuthyl-Dithiocarbamate (NBC), Selendiethyldithiocarbamate (SeEDC), Selendimethyldithiocarbamate (SeDMC), Tellurdiethyldithiocarbamate (TeEDC),
- Thiophosphat- und Dithiophosphat, wie z.B. Zink-O,O-di-n-butyl-dithiophosphat (ZBDP), Zink-O-butyl-O-hexyl-dithiophosphat, Zink-O,O-diisooctyl-dithiophosphat (ZOPD), Dodecylammonium-diisooctyl-dithiophosphat (AOPD), wie z.B. die Rhenogran®-Typen ZDT, ZAT, ZBOP der Firma Rhein Chemie Rheinau GmbH,
- Harnstoff/Thioharnstoffe, wie z.B. Ethylenthioharnstoff (ETU), N,N,N'N'-Tetramethylthioharnstoff (TMTU), Diethylthioharnstoff (DETU), Dibutylthioharnstoff (DBTU), 3-(3,4-Dichlorphenyl)-1,1-dimethylharnstoff (Diuron) etc., und/oder
- Xanthogenatbeschleuniger, wie z.B. Zinkisopropylxanthogenat (ZIX),
- Guanidine, wie z.B. Diphenylguanidin (DPG) und/oder N',N-di-ortho-tolyl-Guanidin (DOTG) und die Guanidine-frei Ersatzbeschleuniger, wie Rhenogran ® XLA 60,

Vulkanisationsverzögerer, sind z.B. N-Nitrososdiphenylamin, N-Cylcohexylthiophthalimid (CPT), z.B. Vulkalent® G), Sulfonamidderivate (z.B. Vulkalent® E/C), Phthalsäureanhydrid (z.B. Vulkalent® B/C), oder Benzoesäureanhydrid.

Hilfsmittel sind z.B. Dispergierhilfsmittel, wie z.B. Fettsäuren, Stearinsäure, Ölsäure, Aktivatoren wie zum Beispiel Zinkoxid, Bleioxid, Bismuthoxid, Lithiumcarbonat, Natriumcarbonat und/oder Calciumhydroxid, Magnesiumoxid, Flammschutzmittel wie Antimonoxid, etc.

Die vorgenannten Füllstoffe, Additive, Weichmacher, Vernetzungsmittel, Vulkanisationsseschleuniger und/oder Vulkanisationsverzögerer, Hilfsmittel usw. sind dem Fachmann vertraut und können auch in granulierter Form, z.B. als polymergebundene Additive oder als die in EP2314442A beschriebenen Vernetzerbatches eingesetzt werden.

Die Kautschukmischungen können weiterverarbeitet werden beispielsweise zu Masterbatches, Grundmischungen und vernetzbaren Kautschukmischungen.

Masterbatches haben typischerweise einen hohen Anteil an Additiven bezogen auf Kautschuk und enthalten beispielsweise:

2,5 bis 90 Gew.-% Kautschuk
0 bis 50 Gew.-% Weichmacher
2 bis 80 Gew.-% silanisierte helle Füllstoffe
0 bis 20 Gew.-% Dispergierhilfsmittel
0 bis 10 Gew.-% Silan

Grundmischungen sind Kautschumischungen, denen vor der praktischen Anwendung nur noch Vernetzungsmittel und ggf. Vulkanisationsbeschleuniger zugesetzt werden müssen, beispielsweise:

100 phr Kautschuk
0 bis 100 phr Weichmacher
0 bis 200 phr Füllstoffe, davon mindestens 10% silanisierte helle Füllstoffe
0 bis 30 phr Hilfsmittel und
0 bis 10 phr Alterungsschutzmittel.

Vernetzbare Kautschukmischungen sind Kautschukmischungen, die zusätzlich 0.01 bis 20 phr Vernetzungsmittel und optional Vulkanisationsbeschleuniger und Vulkanisationsverzögerer enthalten.
Besonders bevorzugt sind vernetzbare Kautschukmischungen, die unter anderen 30 bis 110 phr Ruß und gefällte Kieselsäure, 3 bis 9 phr Silan, 2 bis 7 phr Zinkoxid sowie 0,5 phr bis 4 phr Schwefel und 1 bis 5 phr Beschleuniger enthalten.
Die Erfindung umfasst auch ein Verfahren zur Herstellung von vernetzbaren, silanisierten hellen Füllstoff enthaltenden Kautschukmischungen in dem vor, während und/oder nach der Herstellung der erfindungsgemäßen Kautschukmischung ein oder mehrere Vernetzungsmittel zugefügt werden. Die Vernetzungsmittel können also vor, während und/oder nach dem Mischen des hellen Füllstoffs mit Silanisierungsmittel und Kautschuk zugefügt werden.
Die Herstellung der Masterbatches, der Grundmischung und der vernetzbaren Kautschukmischung erfolgt vorzugsweise nach den, dem Fachmann geläufigen Verfahren, wie beispielsweise beschrieben in PCT/EP2009/058041. Füllstoffe, Hilfsmittel, Vernetzungsmittel und/oder Alterungsschutzmittel werden dabei zusammen mit dem Kautschuk in einem Mischaggregat vermischt. Geeignete Mischaggregate sind zum Beispiel Innenmischer, Walzwerke, Extruder. Besonders geeignet sind Innenmischer mit Austragsextruder.
In einer weiteren Ausführungsform der Erfindung wird in einem ersten Schritt die Grundmischung in einem Mischaggregat hergestellt. Dabei können Temperaturen von mehr als 140°C bis 160°C erreicht werden. In einem zweiten Herstellungsschritt werden nach Abkühlen der Grundmischung auf Temperaturen kleiner 130°C Vernetzungsmittel zur Grundmischung in einem weiteren Mischaggregat hinzugegeben. Ein Teil der Vernetzungsmittel, Vulkanisationsbeschleuniger und/oder Vulkanisationsverzögerer kann dabei schon im ersten Herstellungsschritt zur Grundmischung hinzugegeben werden.
In einer weiteren bevorzugten Ausführungsform wird die Grundmischung im ersten Schritt in einem Mischaggregat hergestellt. Dabei können Temperaturen von mehr als 140°C bis 160°C erreicht werden. In einem zweiten Schritt wird die Mischung homogenisiert Dabei können ebenfalls Temperaturen von mehr als 140°C bis 160°C erreicht werden. In einem dritten Herstellungsschritt werden nach Abkühlen der Grundmischung auf Temperaturen kleiner 130°C Vernetzungsmittel zur Grundmischung in einem weiteren Mischaggregat hinzugegeben. Ein Teil der Vernetzungsmittel, Vulkanisationsbeschleuniger und/oder Vulkanisationsverzögerer kann dabei schon im ersten oder zweiten Herstellungsschritt zur Grundmischung hinzugegeben werden.
Besonders bevorzugt sind dabei kontinuierliche Verfahren, bei denen die Masterbatche, Grundmischungen oder auch die vernetzbaren Kautschukmischungen in einem oder mehreren Prozessschritten mit einem oder mehreren Extrudern hergestellt werden.
Ganz besonders bevorzugt ist das in DE-A-102008040138 beschriebene Herstellungsverfahren für vernetzbare Kautschukmischungen, in dem die Grundmischung in mindestens einem diskontinuierlichen Kneterprozess hergestellt wird, und Vernetzungsmittel in Form der in beschriebenen EP-A-2314442 beschriebenen Vernetzerbatche zur Grundmischung hinzugefügt werden und die Vernetzerbatche in einem kontinuierlichen Prozess mit einem Extruder mit der Grundmischung vermischt werden.
Weiterhin betrifft die Erfindung ein Verfahren zur Herstellung von Vulkanisaten umfassend die erfindungsgemäße Herstellung von vernetzbaren, silanisierte helle Füllstoffe enthaltenden Kautschukmischungen und die nachfolgende Vulkanisation bei einer Temperatur im Bereich von 100 °C bis 200 °C.
Ebenfalls mitumfasst von der Erfindung ist die Verwendung von Messvorrichtungen zur Bestimmung der Ultraschallwellenamplitude a, integrierten Ultraschallwellenamplitude A und/oder der Ultraschallwellenintensität i, der integrierten Ultraschallwellenamplitude I einer oder mehreren Frequenzen in einem Bereich von 4 bis 10 MHz, vorzugsweise von 5 bis 7 MHz für das erfindungsgemäße Prüfverfahren, für die erfindungsgemäßen Herstellungsverfahren von Kautschukmischungen im allgemeinen und vernetzbaren Kautschukmischungen im speziellen. Vorzugsweise umfasst dies auch die Verwendung der genannten Messvorrichtungen zur Bestimmung des relativen Dämpfungskoeffizienten $\alpha_{rel.}$ bei den oben genannten Verfahren.

Somit stellt die vorliegende Erfindung ein Verfahren zur Überprüfung der Silanisierung, zur Verfügung, welches eine inline Kontrolle der in situ Silanisierung von hellen Füllstoffen, insbesondere gefällten Kieselsäuren erlaubt. Dadurch wird eine kontinuierliche in situ Silanisierung bei der Herstellung von silanisierten hellen Füllstoffen enthaltenden Kautschukmischungen und eine repräsentative Kontrolle der Kautschukmischung unter Produktionsbedingungen ermöglicht. Das Verfahren arbeitet zudem zerstörungsfrei und weist eine hohe Toleranz für Ruß als zusätzlichem Bestandteil der Kautschukmischung auf.

Die nachfolgenden Beispiele, Abbildungen und Figuren dienen der Erläuterung der Erfindung, ohne dabei limitierend zu wirken.

Beispiele:

Die Komponenten einer typischen Kautschukmischung für Reifenlaufflächen gemäß Tabelle 1 wurden bereitgestellt.

Tabelle 1: Rezeptur einer typischen Kautschukmischung für Reifenlaufflächen

| Handelsname | | | Dichte [g/cm$^3$] | Menge [phr] |
|---|---|---|---|---|
| Buna CB 24 | Butylkautschuk | Lanxess Deutschland GmbH | 0,91 | 30 |
| Buna VSL 5025-2 HM | Lösungs-Styrol-Butadien-Kautschuk | Lanxess Deutschland GmbH | 0,95 | 70 |
| CB N-330 | Ruß | | 1,8 | 5 |
| Ultrasil GR 7000 | Kieselsäure | Evonik Industries AG | 2 | 90 |
| ASM-TMQ | 2,2,4-Trimethyl-1,2-dihydrochinolin | | 1,1 | 1,5 |
| ASM-6PPD | N-1,3-Dimethylbutyl-N'-phenyl-p-phenylendiamin | | 1 | 2 |
| Stearinsäure | | | 0,89 | 1 |
| Zinkoxid WS | | Norzinco GmbH | 5,6 | 2 |
| Si-69 | Bis-(triethoxy-silyl-propyl)-tetrasulfid | Evonik Industries AG | 0,866 | 10 |

Diese Komponenten wurden gemäß der Mischvorschrift in Tabelle 2 in verschiedenen Chargen gemischt.

Tabelle 2: Mischvorschrift

| Zeit | Mischungsbestandteil | Bemerkung |
|---|---|---|
| 0-0,75' | Polymere | |
| 0,75'-1'20" | Kieselsäure + Si69 + ZnO | Stempel oben |
| 1'20" | | Stempel ab |
| | Alterungsschutzmittel + Stearinsäure | |
| 2' | | |
| 3,5' | | kehren |
| 5' | | Auswurf |

Bei den Chargen R1M1 bis R5M2 wurden die Mischparameter Drehzahl und Vorlauftemperatur variiert gemäß Tabelle 3.

Tabelle 3: Gemischte Chargen einer typischen Kautschukmischung aus Tabelle 1

| | | | 1. Mischstufe | | | | 2. Mischstufe |
|---|---|---|---|---|---|---|---|
| Batch | | | R1M1 | R2M1 | R3M1 | R4M1 | R5M2 |
| **Mischparameter** | | | | | | | |
| Füllgrad | [%] | | 70 | 70 | 70 | 70 | 70 |
| Drehzahl | [U/min.] | | 70 | 40 | 40 | 40 | 70 |
| Vorlauftemperatur | [°C] | | 70 | 70 | 50 | 40 | 70 |
| Mischzeit | [min.] | | 5 | 5 | 5 | 5 | 3 |
| Energieeintrag | [W] | | 135 | 134 | 149 | 146 | 110 |
| Auswurftemperatur $T_A$ | [°C] | | 147 | 126 | 117 | 112 | 142 |

Die Mischung wird, wie in Tabelle 3 angegeben, im 1,5 l Innenmischer (Intermesh) der Firma Gumix S.A. für 5 min. gemischt. Die Kautschukmischung enthält dabei u.a. Kieselsäure und Silan, sowie etwas Ruß.

Das Silan reagiert oberhalb von 140°C mit der Kieselsäureoberfläche. Unterhalb von 140°C findet keine Reaktion statt. Durch die verschiedenen Mischparameter werden unterschiedliche Werte für die Auswurftemperatur $T_A$ unterhalb (Charge R2M1 bis R4M1) und oberhalb (Charge R1M1 und R5M2) von 140°C erreicht. Die Charge R5M2 wurde zudem noch ein zweites Mal im Innenmischer gemischt, um die Reaktion zu vervollständigen (R5M2). Dies entspricht einem typischen Verfahren für in situ Silanisierungen in der Reifenindustrie. Nach dem Mischprozess im Innenmischer wurden die Mischungschargen auf einer Doppelwalze Firma Rubicon Gummitechnik und Maschinentechnik GmbH bei einer Temperierung von 50°C homogenisiert (dreimal links und dreimal rechts eingeschnitten) und zu einem Mischungsfell ausgezogen. Aus dem Fell wurden Streifen geschnitten. Diese Streifen wurden zu einem Einwellenextruder EEK32.12L der Firma Rubicon Gummitechnik und Maschinentechnik GmbH mit geringer Mischwirkung gefüttert. Am Ausgang des Extruders befindet sich ein Sensorkopf, ausgestattet mit zwei gegenüberliegenden Ultraschallwandlern mit einem Abstand von 10 mm, zudem ein Temperatursensor T1 mit einem Schwert das in den Mischungsfluss hinein ragt und ein Druck-/Temperatur-Sensor. Dieser Temperatursensor misst den Druck p und die Temperatur T2 an der Kautschuk-Metall-Grenzfläche. Der Fließkanal im Sensorkopf hat eine Breite von 20 mm und eine Höhe von 10 mm. Der Durchmesser der Ultraschallwandler beträgt 8 mm. Sensorkopf und Extruder wurden bei 120°C temperiert. Die Schneckendrehzahl betrug 20 U/min. Dies entspricht einem Durchsatz von ca. 1 kg Kautschukmischung pro 10 min.

Die inline Qualitätskontrolle wurde mit einem Paar von Ultraschallwandlern K6V1 der Firma GE Sensing & Inspection Technologies GmbH in Transmission durchgeführt. Die Ultraschallwandler wurden mit der Prüfelektronik PCM 100LAN der Firma Inoson GmbH angesteuert. Es wurden 10 bis 40 Ultraschallpulse pro Sekunde mit Hilfe des piezoelektrischen Effektes im Ultraschallwandler erzeugt. Der Ultraschallwandler wandelt die Spannungspulse in Ultraschallsignale um. Dabei wurden die Ultraschallwandler mit 7 Bursts bei der Eigenfrequenz der Ultraschallwandler von 6 MHz angeregt. Der Ultraschallpuls des Transmitters wandert durch die extrudierte Kautschukmischung und wird dabei durch die Kautschukmischung gedämpft. Die Schwingungsamplitude a des Ultraschallsignales wird erniedrigt. Der Receiver empfängt das Schallsignal und wandelt es in ein Spannungssignal um. Das Spannungssignal wird von der Hardware des PCM100LAN mit 32,45 dB verstärkt und zu einem Rechner geleitet. Mit Hilfe des Rechners wird der erste Schallpuls des sogenannten A-Scans mit der sogenannten Fast Fourier Transformation (FFT) ausgewertet. Das so erhaltene Amplitudenspektrum a(f) in Abhängigkeit der Ultraschallfrequenz f wurde bei fünf unterschiedlichen Frequenzbereichen (vgl. Tabelle 4) integriert und logarithmiert. Die so erhaltenen Werte In A($f_{min.}$,$f_{max.}$) für das logarithmierte Integral werden für die verschiedenen Mischungschargen R1M1 bis R4M1 und R5M2 in Abhängigkeit der Zeit t aufgezeichnet. Dies geschieht noch vor Austritt der Mischung aus dem Sensorkopf am Ausgang des Extruders. Die Verweilzeit der Mischung im Sensorkopf betrug weniger als 1 Minute. Das Ergebnis für den Frequenzbereich $f_{rmin.}$ = 5,2 MHz bis $f_{rmax.}$ = 6,9 MHz ist für jede Mischungscharge in den Abbildungen 3 bis 8 dargestellt. Zusätzlich ist der Variationskoeffizient CV zu den Werten In A($f_{min.}$,$f_{max.}$) für 50 Messpunkte angegeben. Der Variationskoeffizient CV ist ein Maß für die Mischungsgüte.

Aus den Werten für In A($f_{min.}$,$f_{max.}$) wird der relative Dämpfungskoeffzient $\alpha_{rel.}$ ($f_{min.}$,$f_{max.}$) nach dem Lambert Beer'schen Gesetz berechnet.

$$\alpha_{rel.}\,(f_{min.},f_{max.}) = (\ln A_{ref.}\,(f_{min.},f_{max.}) - \ln A(f_{min.},f_{max.})/x \quad (1d)$$

Hierbei ist x der Abstand zwischen den Ultraschallwandlern. In Gl. (1d) ist der Mittelwert von In $A_{ref.}(f_{min.},f_{max.})$ der Referenzmischung R5M2 (Standardmischverfahren) für eine Zeitspanne für die Extrusion von At = 5 min.. In Tabelle 4 sind die Mittelwerte für den relativen Dämpfungskoeffizient $\alpha_{rel.}(f_{min.},f_{max.})$ für eine Zeitspanne von $\Delta t$ = 4 min bis $\Delta t$ = 8 min. für die Extrusion für jede Mischungscharge dargestellt. Zudem wurde die Standardabweichung $\sigma$ der relativen Dämpfungskoeffizienten $\alpha_{rel.}(f_{min.},f_{max.})$ nach Gl. (1d) ermittelt. Außerdem ist der Mittelwert des Drucksensors p und die Mittelwerte für der Temperatursensor T1 mit Schwert und T2 ohne Schwert angegeben. Die Schallgeschwindigkeit $V_s$ wird aus dem Abstand x und der Zeit $t_{oF}$ bis zur ersten Spannungsamplitude ermittelt. Dabei muss die Zeit $t_{US}$ = 4,6 $\mu$s des Ultraschallschallsignales im Vorlauf der Ultraschallwandler berücksichtigt nach Gl. (2) werden.

$$V_S = x/(t_{oF} - t_{US}) \qquad (2)$$

Zusätzlich zu den Ultraschallkennwerten wurde die Viskosität nach Mooney ML1+4 (100°C) als nicht-repräsentative offline Standard Qualitätskontrolle ermittelt.

Tabelle 4: Messung der extrudierten Chargen aus Tabelle 3

| Extrudierte Charge nach | | 1. Mischstufe | | | | 2. Mischstufe |
|---|---|---|---|---|---|---|
| Batch | | **R1M1** | **R2M1** | **R3M1** | **R4M1** | **R5M2** |
| **Standard Prozesskontrolle** | | | | | | |
| Mooney Viskosität ML1+4 (100°C) | [MU] | 143 | 150 | 151 | nicht messbar | 122 |
| **Messbedingungen** | | | | | | |
| Druck p | [bar] | 31 ± 3 | 34 ± 1 | 35 ± 1 | 38 ± 1 | 34 ± 2 |
| T1 | [°C] | 124 ± 1 | 125 ± 1 | 125 ± 1 | 124 ± 1 | 124 ± 1 |
| T2 | [°C] | 122 ± 1 | 122 ± 1 | 122 ± 1 | 121 ± 1 | 121 ± 1 |
| **Ultraschallkennwerte** | | | | | | |
| $V_s$ | [m/s] | 1214 ± 3 | 1218 ± 2 | 1220 ± 3 | 1222 ± 2 | 1218 ± 3 |
| Rel. Dämpf.koeff. $\alpha_{rel.}$ | | | | | | |
| (1,1 MHz bis 1,7 MHz) | [1/m] | 1 ± 2 | 3 ± 2 | 3 ± 2 | 2 ± 2 | 0 ± 1 |
| (1,7 MHz bis 2,8 MHz) | [1/m] | 3 ± 2 | 4 ± 2 | 3 ± 2 | 2 ± 2 | 0 ± 2 |
| (2,8 MHz bis 4,0 MHz) | [1/m] | 4 ± 2 | 6 ± 2 | 6 ± 3 | 4 ± 2 | 0 ± 2 |
| (4,0 MHZ bis 5,2 MHz) | [1/m] | 5 ± 2 | 9 ± 3 | 9 ± 3 | 9 ± 2 | 0 ± 2 |
| (5,2 MHz bis 6,9 MHz) | [1/m] | 7 ± 3 | 14 ± 3 | 15 ± 4 | 14 ± 2 | 0 ± 2 |

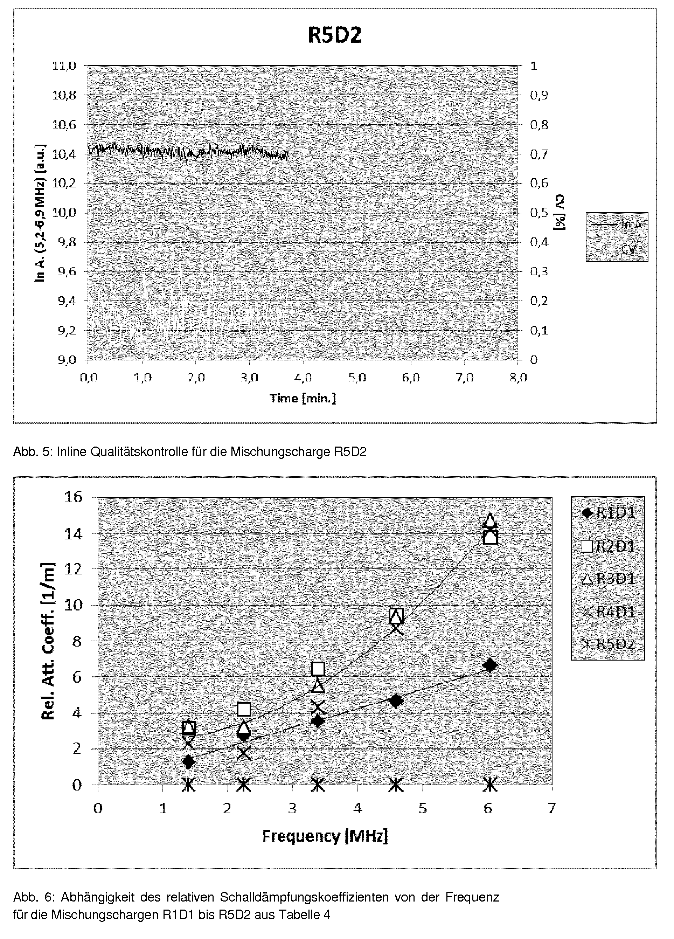

Es zeigt sich in Tabelle 4, dass die Werte für die relative Schalldämpfung $\alpha$rel. ab 4 MHz der Charge R1M1 signifikant kleiner sind als die Werte der Chargen R2D1, R3M1 und R4M1 (Abb. 6). Die Auswurftemperatur TA der Charge R1 M1 liegt oberhalb von 140°C, sodass die Silanisierungsreaktion stattfinden konnte. Die Auswurftemperatur TA der Chargen R2M1, R3M1 und R4M1 lag unterhalb von 140°C, sodass keine Silanisierungsreaktion stattfinden konnte. Unterhalb von 4 MHz ist der Unterschied relativ zur Standardabweichung $\sigma$ der Werte für dne relativen Schalldämpfungskoeffizient $\alpha_{rel.}(f_{min.},f_{max.})$ eher gering, sodass keine eindeutige Aussage möglich ist.

Die niedrigen Werte für R1M1 und für R5M2 gegenüber R3M1 und R4M1 können dabei nicht auf eine verbesserte Dispersion des Füllstoffs (hier: die Kieselsäure), wie in A. Schröder, L. Gräff. L. Wawrzinski , Kautschuk Gummi Kunststoffe, 67 (2015), 11, beschrieben, zurückgeführt werden. Darin nimmt mit zunehmender Füllstoffdispersion die Ultraschallamplitude zu, gleichzeitig nimmt der Variationskoeffizient CV ab. Im Gegensatz dazu nimmt der Variationskoeffizient CV der Mischungen R1 M1 und R5M2 (in Abb. 1 und Abb. 5) Werte oberhalb von 0,2% an. Die Werte für den Variationskoeffizient der Mischungen R3M1 und R4M1 sind dagegen alle kleiner als 0,2%. Offenbar führt der höhere Energieeintrag während des Knetprozesses für die Chargen R3M1 und R4M1 aufgrund der niedrigeren Temperatur zu einer verbesserten Füllstoffdispersion. Trotzdem sind die Werte für In $A(f_{min.},f_{max.})$ der Chargen R3M1 und R4M1 geringer als für R1 M1 und R5M2. Da Chargen mit gleicher Zusammensetzung verwendet wurden und keine signifikanten Änderungen der Messbedingungen (gleiche Werte für p, T1, und T2) bei der Inline Qualitätskontrolle beobachtet wurden, können die unterschiedlichen relativen Schalldämpfungskoeffizienten $\alpha_{rel.}(f_{min.},f_{max.})$ nur mit einer chemischen Reaktion der Kieselsäureoberfläche mit dem Silan erklärt werden.

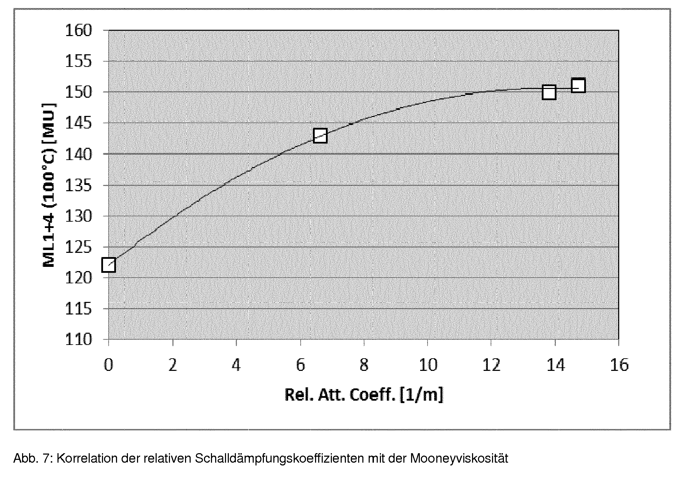

Zudem sinkt der relative Schalldämpfungskoeffizient $\alpha_{rel.}(f_{min.},f_{max.})$weiter, wenn die Silanisierung entsprechend dem Standardverfahren σ in einem zweiten Mischschritt vervollständigt wird (Vergleich R1M1 und R5M2). Die Werte für den relativen Schalldämpfungskoeffizient $\alpha_{rel.}(f_{min.}, f_{max.})$ bei einer Frequenz $\geq 4$ MHz korrelieren dabei mit den Werten für die Mooney Viskosität ML1+4 (100°C) als offline Standardverfahren zur Qualitätskontrolle für nicht vernetzte Kautschukmischungen (Abb 7). Dies zeigt offensichtlich, dass die Güte der in situ Silanisierung mit Hilfe der Bestimmung des relativen Schalldämpfungskoeffizienten $\alpha_{rel.}(f_{min.}, f_{max.})$ ermittelt werden kann.

**Patentansprüche**

1. Verfahren zur Prüfung der Silanisierung von hellen Füllstoffen, wobei eine Mischung enthaltend mindestens einen silanisierten hellen Füllstoff und mindestens einen Kautschuk extrudiert, das Extrudat mit Ultraschallwellen in einem Frequenzbereich von 4 bis 10 MHz, vorzugsweise von 5 bis 7 MHz, beschallt und die Signalstärke der Ultraschallwellen nach Transmission durch das Extrudat bestimmt wird.

2. Verfahren gemäß Anspruch 1, wobei der relative Dämpfungskoeffizient $\alpha_{rel}$ des Extrudats in dem Frequenzbereich der Ultraschallwellen bestimmt wird.

3. Verfahren gemäß Anspruch 1 oder 2, wobei zusätzlich der Variationskoeffizient des Logarithmus der Ultraschallwellenintensität oder der Ultraschallwellenamplitude In A ermittelt und zur Kontrolle der Dispergierung des hellen Füllstoffes im Extrudat verwendet wird.

4. Verfahren gemäß einem oder mehreren der Ansprüche 1 bis 3, wobei auch die Standardabweichung des relativen Dämpfungskoeffizient $\alpha_{rel}$ ermittelt und zur Kontrolle der Dispergierung des hellen Füllstoffes im Extrudat verwendet wird.

5. Verfahren gemäß einem oder mehreren der Ansprüche 1 bis 4, wobei der Abstand zwischen einem Sender, der die Ultraschallwellen emittiert und einem Empfänger, der die Ultraschallwellen empfängt mehr als 5 mm beträgt, bevorzugt im Bereich von 10 mm bis 25 mm, besonders bevorzugt von 15 bis 20 mm.

6. Verfahren gemäß einem oder mehreren der Ansprüche 1 bis 5, wobei der Füllstoff in der Kautschukmischung mit 50 bis 250 phr, vorzugsweise 60 bis 150 und besonders bevorzugt 70 bis 100 phr enthalten ist.

7. Verfahren gemäß einem oder mehreren der Ansprüche 1 bis 6, wobei der silanisierte Füllstoff im Extruder aus mindestens einem hellen Füllstoff und mindestens einem Silanisierungsmittel gebildet wird.

8. Verfahren zur Herstellung von silanisierten hellen Füllstoffen enthaltenden Kautschukmischungen, wobei mindestens ein heller Füllstoff mit mindestens einem Kautschuk und mindestens einem Silanisierungsmittel gemischt und silanisiert wird und wobei zumindest ein Teil, vorzugsweise mehr als 1 Vol.-%, besonders bevorzugt mehr als 10 Vol.-%, meist bevorzugt 100 Vol.-% der Kautschukmischung durch das Verfahren gemäß einem oder mehreren der Ansprüche 1 bis 7 geprüft werden.

9. Verfahren gemäß Anspruch 7 oder 8, wobei die Silanisierung bei einer Temperatur von 140 bis 160 °C erfolgt.

10. Verfahren gemäß Anspruch 8 oder 9, wobei das Verfahren kontinuierlich oder als Batchverfahren, vorzugsweise kontinuierlich betrieben wird.

11. Verfahren gemäß einem oder mehreren der Ansprüche 8 bis 10, wobei als Silanisierungsmittel ein Silan, vorzugsweise Bis(3-triethoxysilypropyl)tetrasulfid verwendet wird.

12. Verfahren zur Herstellung von vernetzbaren, silanisierten hellen Füllstoff enthaltenden Kautschukmischungen, umfassend das Verfahren gemäß einem oder mehreren der Ansprüche 8 bis 11, wobei vor, während und/oder nach der Herstellung der Kautschukmischung ein oder mehrere Vernetzungsmittel zugefügt werden.

13. Verfahren zur Herstellung von Vulkanisaten umfassend die Herstellung von vernetzbaren, silanisierte helle Füllstoffe enthaltenden Kautschukmischungen nach einem Verfahren gemäß Anspruch 12, und eine nachfolgende Vulkanisation bei einer Temperatur im Bereich von 100 °C bis 200 °C.

14. Verwendung von Messvorrichtungen zur Bestimmung der Schallwellenamplitude und/oder Schallwellenintensität bei einer Frequenz der Ultraschallwellen in einem Bereich von 4 bis 10 MHz vorzugsweise von 5 bis 7 MHz für ein Verfahren gemäß einem der Ansprüche 1 bis 13.

15. Verwendung von Messvorrichtungen gemäß Anspruch 14, wobei der Dämpfungskoeffizient im Bereich der Frequenz der Ultraschallwellen bestimmt wird.

Fig. 1

(4)

(4)

(5)

(1)

Fig.2

(2)

(4)

(3)

(5)

(4) (4) (4) (4) (4)

Fig.3

## R1D1

Abb. 1: Inline Qualitätskontrolle für die Mischungscharge R1D1

## R2D1

Abb. 2: Inline Qualitätskontrolle für die Mischungscharge R2D1

Abb. 3: Inline Qualitätskontrolle für die Mischungscharge R3D1

Abb. 4: Inline Qualitätskontrolle für die Mischungscharge R4D1

Abb. 5: Inline Qualitätskontrolle für die Mischungscharge R5D2

Abb. 6: Abhängigkeit des relativen Schalldämpfungskoeffizienten von der Frequenz für die Mischungschargen R1D1 bis R5D2 aus Tabelle 4

Abb. 7: Korrelation der relativen Schalldämpfungskoeffizienten mit der Mooneyviskosität

**Europäisches Patentamt**
**European Patent Office**
**Office européen des brevets**

# EUROPÄISCHER RECHERCHENBERICHT

Nummer der Anmeldung

EP 16 15 2537

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 911 359 A1 (PIRELLI [IT]) 28. April 1999 (1999-04-28) * Absatz [0102]; Ansprüche 1-32 * ----- | 1-15 | INV. C08L23/22 |
| X | EP 1 357 156 A2 (DEGUSSA [DE]) 29. Oktober 2003 (2003-10-29) * Absatz [0165] - Absatz [0175] * * Absatz [0006] * ----- | 1-15 | |
| A | JAUNICH M ET AL: "Monitoring the vulcanization of elastomers: Comparison of curemeter and ultrasonic online control", POLYMER TESTING, ELSEVIER, AMSTERDAM, NL, Bd. 28, Nr. 1, 1. Februar 2009 (2009-02-01), Seiten 84-88, XP025768223, ISSN: 0142-9418, DOI: 10.1016/J.POLYMERTESTING.2008.11.005 [gefunden am 2008-11-21] * das ganze Dokument * ----- | 1-15 | |

**RECHERCHIERTE SACHGEBIETE (IPC)**

C08K
C08L

Der vorliegende Recherchenbericht wurde für alle Patentansprüche erstellt

| Recherchenort | Abschlußdatum der Recherche | Prüfer |
|---|---|---|
| München | 9. Juni 2016 | Scheid, Günther |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 & : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 16 15 2537

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-06-2016

| Im Recherchenbericht angeführtes Patentdokument | Datum der Veröffentlichung | Mitglied(er) der Patentfamilie | Datum der Veröffentlichung |
|---|---|---|---|
| EP 0911359 A1 | 28-04-1999 | AR 017148 A1 | 22-08-2001 |
| | | AT 263801 T | 15-04-2004 |
| | | BR 9803366 A | 14-12-1999 |
| | | DE 69728538 D1 | 13-05-2004 |
| | | DE 69728538 T2 | 17-03-2005 |
| | | EP 0911359 A1 | 28-04-1999 |
| | | ES 2219745 T3 | 01-12-2004 |
| | | JP 4346707 B2 | 21-10-2009 |
| | | JP H11179785 A | 06-07-1999 |
| EP 1357156 A2 | 29-10-2003 | AT 537225 T | 15-12-2011 |
| | | BR 0301132 A | 17-08-2004 |
| | | CA 2426059 A1 | 25-10-2003 |
| | | CN 1453312 A | 05-11-2003 |
| | | DE 10218350 A1 | 20-11-2003 |
| | | EP 1357156 A2 | 29-10-2003 |
| | | ES 2378064 T3 | 04-04-2012 |
| | | JP 4523242 B2 | 11-08-2010 |
| | | JP 2004002843 A | 08-01-2004 |
| | | KR 20030084689 A | 01-11-2003 |
| | | MX PA03003616 A | 16-08-2005 |
| | | PL 359836 A1 | 03-11-2003 |
| | | RU 2326145 C2 | 10-06-2008 |
| | | TW I304080 B | 11-12-2008 |
| | | US 2003200900 A1 | 30-10-2003 |
| | | ZA 200303211 A | 06-12-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69728538 T2
- EP 2314442 A
- EP 2009058041 W
- DE 102008040138 A

**In der Beschreibung aufgeführte Nicht-Patentliteratur**

- **F. RÖTHEMEYER ; F. SOMMER.** Kautschuktechnologie Werkstoffe, Verarbeitung Produkte. Hanser Verlag, 272
- **F. RÖTHEMEYER ; F. SOMMER.** Kautschuktechnologie Werkstoffe, Verarbeitung Produkte. Hanser Verlag, 390
- **HOCHREIN et al.** *Plastverarbeiter,* September 2009, 92
- **A. SCHRÖDER ; L. GRÄFF. ; L. WAWRZINSKI.** *Rubber World,* 2015, vol. 251, 28
- *Rubber World,* 2015, vol. 251, 28
- **M. JAUNICH ; B. STARK ; B. HOSTER.** *Polymer Testing,* 2009, vol. 28, 84